(19) Europäisches Patentamt / European Patent Office / Office européen des brevets

(11) **EP 2 323 412 A1**

(12) **EUROPEAN PATENT APPLICATION**

(43) Date of publication:
**18.05.2011 Bulletin 2011/20**

(51) Int Cl.:
**H04N 13/00** *(2006.01)*

(21) Application number: **09175901.9**

(22) Date of filing: **13.11.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Koninklijke Philips Electronics N.V.**
**5621 BA Eindhoven (NL)**

(72) Inventors:
• **Eskenazi, Evgeny**
  **5600 AE, Eindhoven (NL)**

• **Vanderheijden, Gerardus, W.T.**
  **5600 AE, Eindhoven (NL)**
• **Kuijpers, Henricus, J.C.**
  **5600 AE, Eindhoven (NL)**

(74) Representative: **Damen, Daniel Martijn**
**Philips Intellectual Property & Standards**
**P.O. Box 220**
**5600 AE Eindhoven (NL)**

(54) **Generating an image signal**

(57) The invention relates to a device (100) for generating a two dimensional (2D) output image signal representing an alternate viewpoint of a three dimensional (3D) scene from a 2D input image signal representing a first viewpoint of the 3D scene and a 2D depth signal, the resolution of the 2D depth signal being lower than the resolution of the 2D input image signal. The device (100) comprises an image receiving means (101) for receiving the 2D input image signal, a depth receiving means (102) for receiving the 2D depth signal, a down-scaler (103) for down-scaling the 2D input image signal to the resolution of the 2D depth signal, a viewpoint generator (104) for generating a 2D intermediate image from the down-scaled 2D input image signal and the 2D depth signal, the 2D intermediate image representing an alternate viewpoint of the 3D scene, and an up-scaler (200) for generating a 2D output image signal by up-scaling the 2D intermediate image signal.

Fig. 1

**Description**

FIELD OF THE INVENTION

The invention relates to a method for generating a two dimensional (2D) output image signal representing an alternate viewpoint of a three dimensional (3D) scene from a 2D input image signal representing a first viewpoint of the 3D scene and a 2D depth signal, the resolution of the 2D depth signal being lower than the resolution of the 2D input image signal.

Throughout the text, any reference to an image signal or depth signal without an explicit indication of dimensionality will refer to a 2D image signal or 2D depth signal, respectively, and a 'depth map' can be considered to be equivalent to a 2D depth signal. Furthermore, a video signal and a still image signal are both considered to be examples of an image signal.

One of the formats for transmitting and storing 3D image signals is the 'image plus depth' format (also known as '2D plus depth'), where an image signal representing a first viewpoint of a 3D scene is accompanied by a depth signal containing depth values that indicate the distance that objects within the image signal have towards the camera. The image plus depth format provides an efficient way of representing a 3D scene, but cannot be used in stereo or multi-view 3D displays directly. Addressing such displays requires an additional step wherein at least one additional image signal representing an alternate viewpoint of the 3D scene is generated; this step is known as 'rendering' or 'viewpoint generation'.

For example, a stereoscopic 3D display may require a stereo input format comprising a left and right input image signal. If the image signal representing a first viewpoint is used as the left input image signal, a suitable right input image signal can be created by generating an additional image signal representing an alternate viewpoint, with the alternate viewpoint being located right of the first viewpoint in the 3D scene as to simulate binocular vision. If an observer of the stereoscopic display is then presented with the first and alternate viewpoint of the scene in the observer's left and right eye, respectively, the result will typically be a perception of depth.

BACKGROUND OF THE INVENTION

To save transmission bandwidth and/or storage capacity, the depth signal contained within the image plus depth format may have a lower resolution than the resolution of the image signal. However, the viewpoint generation typically requires a depth value to be provided for each pixel of the image signal. A depth value is only provided for each pixel if the depth signal and image signal have identical resolutions.

A publication 'Multi-step joint bilateral depth upsampling' by A.K. Riemens et al. in Visual Communications and Image signal Processing, 2009, proposes that in such cases where the resolution of the depth signal is lower than the resolution of an input image signal, the depth signal can be up-scaled (also known as 'upsampled') to the input image signal resolution by means of an up-scaling method. This provides identical resolutions of the up-scaled depth signal and the input image signal.

The above method enables real-time implementation on devices in consumer platforms since the up-scaling method has been optimized for computational complexity.

SUMMARY OF THE INVENTION

A problem of the known method, and of a device incorporating said method, is that the computational complexity of generating an output image signal representing an alternate viewpoint of the 3D scene is relatively high. With the computational complexity of the viewpoint generation being proportional to the resolution of the input image signal, and the resolutions of video standards ever increasing, the approach of up-scaling the depth signal to the input image signal resolution and performing the viewpoint generation at the up-scaled resolution necessarily leads to a relatively high computational complexity, despite the fact that the up-scaling method itself may be optimized.

It is an object of the invention to provide a device having a lower computational complexity for generating an output image signal representing an alternate viewpoint of a 3D scene from an input image signal representing a first viewpoint of the 3D scene and a depth signal of the 3D scene from the first viewpoint, the resolution of the depth signal being lower than the resolution of the input image signal.

According to the invention, this object is realized in that the device comprises an image receiving means for receiving an input image signal at a first resolution, the input image signal representing the 3D scene from a first viewpoint, a depth receiving means for receiving a depth signal at a second resolution, the second resolution being lower than the first resolution, a down-scaler for generating a down-scaled image signal by down-scaling the input image signal to the second resolution, a viewpoint generator for displacing at least one part of the down-scaled image signal as a function of the depth signal to generate an intermediate image signal, the intermediate image signal representing an alternate viewpoint of the 3D scene represented by the input image signal and the depth signal, and an up-scaler for generating an output image signal by up-scaling the intermediate image signal.

In a further aspect of the invention, a video device comprises the device set forth, the video device further comprising at least one of: a display for displaying an image based on the output image signal, a broadcast receiver for providing the input image signal by receiving a broadcast signal, an internet receiver for providing the input image signal by receiving an internet signal or a reader for providing the input image signal by reading a storage medium.

In a further aspect of the invention, a method for generating an image signal representing a viewpoint of a 3D scene comprises receiving an input image signal at a first resolution, the input image representing the 3D scene from a first viewpoint, receiving a depth signal of the 3D scene from the first viewpoint at a second resolution, the second resolution being lower than the first resolution, generating a down-scaled image signal by down-scaling the input image signal to the second resolution, generating an intermediate image by displacing at least one part of the down-scaled image signal as a function of the depth signal, the intermediate image signal representing an alternate viewpoint of the 3D scene represented by the input image signal and the depth signal, and generating an output image signal by up-scaling the intermediate image signal.

In a further aspect of the invention, a computer program product comprises instructions for causing a processor system to perform the method set forth.

The measures according to the invention provide a down-scaled image signal and a depth signal, both signals having an identical resolution and the resolution being lower than the resolution of the input image signal. The viewpoint generator generates an intermediate image signal from the down-scaled image signal and the depth signal. The viewpoint generation therefore takes place at the lower resolution of the depth signal and not at the higher resolution of the input image signal. An output image signal is then obtained by up-scaling the intermediate image to a higher resolution.

The computational complexity of the viewpoint generation is proportional to the resolution at which the viewpoint generation takes place. Hence, by performing the viewpoint generation at the lower resolution of the depth signal, the computational complexity of the viewpoint generation is reduced. Still, an output image signal is obtained that has a higher resolution than the depth signal, as the output of the viewpoint generator is up-scaled. The computational complexity of the viewpoint generation significantly affects the cost of a device incorporating a viewpoint generator. Advantageously, by reducing the computational complexity of the viewpoint generation, the cost of the device incorporating said viewpoint generator is lowered.

In an embodiment of the invention, the up-scaler comprises an up-scaling unit for generating an up-scaled image signal by up-scaling the intermediate image signal and a resolution synthesizer for synthesizing the output image signal in dependence of the input image signal and the up-scaled image signal.

The resolution synthesizer creates the output image signal by using the input image signal and the up-scaled image signal. The output image signal needs to represent the same viewpoint that is represented by the up-scaled image signal. However, instead of only up-scaling the intermediate image signal, the output image signal can be improved by exploiting the fact that the input image signal is free of any artifacts that a viewpoint generator may generate, and that the input image signal is originally of a higher resolution whereas the up-scaled image signal is up-scaled from a lower resolution image signal. The resolution synthesizer therefore uses both the input image signal and the up-scaled image signal to create an output image signal with an improved picture quality.

In an embodiment of the invention, the up-scaler further comprises a first filtering means for generating a high-frequent image signal comprising high-frequency elements of the input image signal, the resolution synthesizer being arranged for synthesizing the output image signal in dependence of the high frequent image signal.

The resolution synthesizer further uses the high frequent image signal to create the output image signal. The up-scaled image signal is up-scaled from a lower resolution image signal, and hence lacks high frequency elements, whereas the input image signal is originally of a higher resolution and therefore typically contains high frequency elements. The resolution synthesizer therefore uses the high frequency elements of the input image signal to provide an increase in sharpness and/or detail level of the output image signal, which results in an improved picture quality of the output image signal.

In an embodiment of the invention, the up-scaler further comprises a second filtering means for generating a first mid-frequent image signal comprising mid-frequency elements of the input image signal, a third filtering means for generating a second mid-frequent image signal comprising mid-frequency elements of the up-scaled image signal, a location determiner for determining a first location where the first mid-frequent image signal corresponds to the second mid-frequent image signal at a reference location, and wherein the resolution synthesizer is further arranged for synthesizing the output image signal in dependence of the high-frequent image signal at the first location and the up-scaled image signal at the reference location.

The resolution synthesizer creates the output image signal by further using the high-frequent image signal at the first location and the up-scaled image signal at the reference location. The first location and the reference location indicate where an image part is located in both image signals. It is likely that both locations are different, since both image signals represent different viewpoints of a 3D scene. The location determiner provides the location of an image part in both image signals, and allows the resolution synthesizer to compensate for said difference in location. The resolution synthesizer therefore provides an improvement in sharpness and/or detail level of the output image signal irrespective of the difference in viewpoint.

In an embodiment of the invention, the location determiner is arranged for determining a first correspondence value indicative of correspondence between the first mid-frequent image signal at the first location and the second mid-frequent image signal at the reference location, and the resolution synthesizer is further arranged for synthesizing the output image signal in dependence of the first correspondence value.

The resolution synthesizer creates the output image signal by further using the first correspondence value. The first correspondence value indicates the reliability of determining the first location. If said reliability is low, it is likely that the resolution synthesizer creates artifacts by using the first location to compensate for a difference in viewpoint. Hence, the resolution synthesizer is adjusted to rely less on the viewpoint compensation if the reliability of determining the first location is low.

In an embodiment of the invention, the location determiner is further arranged for generating at least one additional location in dependence of the first location, the additional location being located at a distance from the first location, determining at least one additional correspondence value indicative of correspondence between the first mid-frequent image signal at the additional location and the second mid-frequent image signal at the reference location, and the resolution synthesizer is further arranged for synthesizing the output image signal in dependence of the high-frequent image signal at the additional location and the additional correspondence value.

The location determiner generates at least one additional location based on the first location. It may be that the first location was determined inaccurately and therefore has a relatively low correspondence value. The resolution synthesizer may then create artifacts by using the first location to compensate for a difference in viewpoint. The additional location is therefore considered to be a possible location where the correspondence with an image part at the reference location is improved. The additional correspondence value is determined to express said correspondence. The resolution synthesizer is then adjusted to weight the high frequent image signal at the first location and at the additional location depending on their respective correspondence values. The resolution synthesizer therefore provides an improvement in picture quality of the output image signal even if the first location was not determined perfectly.

In an embodiment of the invention, the up-scaler further comprises an auxiliary receiving means for receiving an auxiliary 3D signal comprising at least one of an occlusion or a transparency signal, and wherein the up-scaler is arranged for generating the output image signal in dependence of the auxiliary 3D signal.

If occlusion and/or transparency is present, as indicated by the auxiliary 3D signal, the viewpoint generator may create an intermediate image signal that has different characteristics than if neither occlusion nor transparency is present. The up-scaler therefore exploits the knowledge of occlusion and/or transparency being present to adjust the up-scaling for creating the output image signal. This results in an improved picture quality of the output image signal if occlusion and/or transparency is present.

The viewpoint generator may use an auxiliary 3D signal next to the depth signal to enable a better viewpoint generation, the auxiliary 3D signal comprising a parallax or a transparency signal. If the depth signal is transmitted at a lower resolution, the auxiliary 3D signal is likely also transmitted at the lower resolution. By performing the viewpoint generation at the lower resolution of the depth signal, the up-scaling of the auxiliary 3D signal is not needed. Since the up-scaling of the auxiliary 3D signal is computationally complex and error prone, this disadvantageous step can be avoided.

In an embodiment of the invention, the device further comprises a metadata receiving means for receiving metadata indicative of production of the depth signal, and wherein the down-scaler is arranged for adapting the down-scaling in dependence of the metadata.

In a further aspect of the invention, a 3D image signal representing a 3D scene comprises an image signal at a first resolution, a depth signal at a second resolution, the second resolution being lower than the first resolution, and the 3D image signal further comprising metadata indicative of production of the depth signal.

In a further aspect of the invention, a storage medium comprises the 3D image signal set forth.

In a further aspect of the invention, a method for generating a 3D image signal comprises including in the 3D image signal an image signal at a first resolution, including in the 3D image signal a depth signal at a second resolution, the second resolution being lower than the first resolution, generating metadata indicative of production of the depth signal, and including the metadata in the 3D image signal.

The measures according to the invention provide metadata indicative of how the depth signal is produced during content creation and/or transmission. A depth signal accompanying an image signal is typically matched in characteristics to the image signal. However, if the resolution of the depth signal is lower than that of the image signal, many particularly resolution-related characteristics of both signals mismatch. This may create artifacts during the viewpoint generation, since both signals are combined to create an intermediate image signal.

Knowledge on how the lower resolution depth signal is produced gives an indication of the way the lower resolution depth signal and the higher resolution image signal mismatch. The mismatch can now be at least partially compensated by including this knowledge in the form of metadata in a 3D image signal, and adapting the down-scaling of the input image signal in dependence of the metadata in a device receiving said 3D image signal. The down-scaled image signal now better matches the characteristics of the depth signal, which results in an improved viewpoint generation and therefore an output image signal that has an improved picture quality.

A technique for generating an output image signal representing an alternate viewpoint of a 3D scene is known from WO2006/120607, hereby incorporated by reference. Here, a first (input) image signal is received and then at least one color component of the first image signal is rendered (the step of viewpoint generation) in reduced spatial resolution to produce a second (output) image signal. The second image signal is spatial filtered wherein spatial errors and view errors are balanced when reconstructing a full resolution signal for the display. However, this document does not disclose how to generate an output image signal if the depth signal has a lower resolution than the input image signal, and in particular, how to generate an output image signal at a low computational complexity in such a case. Hence, the document does not offer a solution for the problem set forth. These and other aspects, features and advantages of the invention will be apparent from and elucidated with reference to the embodiment(s) described hereinafter.

BRIEF DESCRIPTION OF THE DRAWINGS

In the drawings,

Fig. 1 is a block diagram of a device;
Fig. 2 is a block diagram of an up-scaler;
Fig. 3 is a block diagram of an up-scaler comprising a location determiner;
Fig. 4 is a block diagram of a device comprising a high frequency transferer;
Fig. 5 is a block diagram of a device comprising a pixel transferer;
Fig. 6 is a block diagram of a device comprising a metadata receiving means;
Fig. 7 is a block diagram of a video device comprising a display, a broadcast receiver, an internet receiver and a reader.
Fig. 8 shows a 3D image signal representing a 3D scene;
Fig. 9 is a flowchart of a method for generating a 3D image signal;
Fig. 10 is a flowchart of a method for generating an image signal;
Fig. 11 shows a storage medium comprising a 3D image signal.

DETAILED DESCRIPTION OF EMBODIMENTS

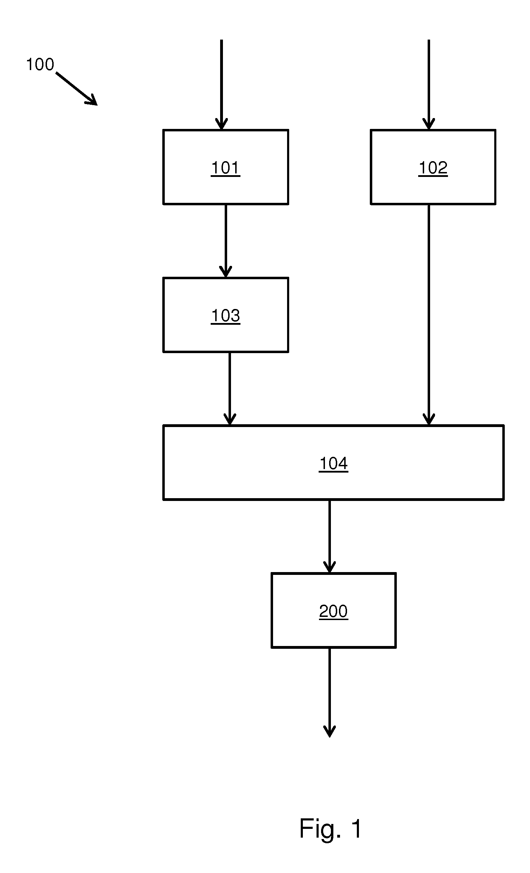

Fig. 1 is a block diagram of a device 100 for generating an image signal representing a viewpoint of a 3D scene, the device 100 comprising an image receiving means 101 for receiving an input image signal at a first resolution, the input image signal representing the 3D scene from a first viewpoint. Usually, the input image signal represents the viewpoint of the camera that was employed while recording the 3D scene. The input image signal may have any suitable resolution, such as e.g. high definition (HD) 1920x1080 pixels or standard definition (SD) 720x576 pixels.

The device 100 further comprises a depth receiving means 102 for receiving a depth signal at a second resolution of the 3D scene from the first viewpoint, the second resolution being lower than the first resolution. The depth signal may be created by the camera that was employed for recording the input image signal, by a separate camera that specifically measures the depth information, or the depth signal may be synthetically generated during content creation. The depth signal may have any suitable resolution that is lower than the resolution of the input image signal. For example, the image signal may be of HD resolution, e.g. 1920x1080 pixels, and the depth signal may be of approximately SD resolution, e.g. 640x360 pixels or 960x540 pixels.

The device 100 further comprises a down-scaler 103 for generating a down-scaled image signal by down-scaling the input image signal to the second resolution. In principle, any type of down-scaler can be used, such as a poly-phase down-scaler or simple pixel dropping. Also, a down-scaler may be used that is optimized for avoiding alias in the down-scaled image while at the same time not unnecessarily suppressing high frequency elements. In the field of filter design, solutions for designing such a down-scaler are known.

The device 100 further comprises a viewpoint generator 104 for displacing at least one part of the down-scaled image signal as a function of the depth signal to generate an intermediate image, the intermediate image signal representing an alternate viewpoint of the 3D scene represented by the input image signal and the depth signal. In this context, displacing may comprise copying, moving, shifting, deforming or any other action by which an image part from a first location is created at a second location. Viewpoint generators are known to those skilled in the art, and a commonly used type of viewpoint generator is the so-called parallactic shift renderer.

An example of a parallactic shift renderer is known from WO1997/023097, hereby incorporated by reference. Here, an output image signal is created through a parallactic transformation of an input image signal. Pixels of the input image signal are supplied as a color value and a depth value. A depth converter converts the depth value into a depth-dependent pixel shift, which is stored in a memory together with the color value. A processor generates the output image signal from the stored input image signal for 'on the fly' supply to a stereoscopic display system by shifting the input pixels.

The device 100 further comprises an up-scaler 200 for generating an output image signal by up-scaling the intermediate image signal. In principle, any type of up-scaler may be used, such as a poly-phase up-scaler or simple pixel repetition. Also, an up-scaler may be used that is optimized for generating an output image that is sufficiently sharp and/or contains sufficient details. In the field of video enhancement, solutions for designing such an up-scaler are known. For example, US patent 6323905 B1 describes a learning-based method for creating an up-scaled image signal including high-frequency components from an input image signal that does not include high-frequency components. Also, a so-called example based super-resolution method can be used which uses a database of high-resolution patches to create additional detail in similar low-resolution patches, as described in 'Example-Based Super-Resolution' by W.T. Freeman et al. in IEEE Computer Graphics and Applications, March/April, 2002.

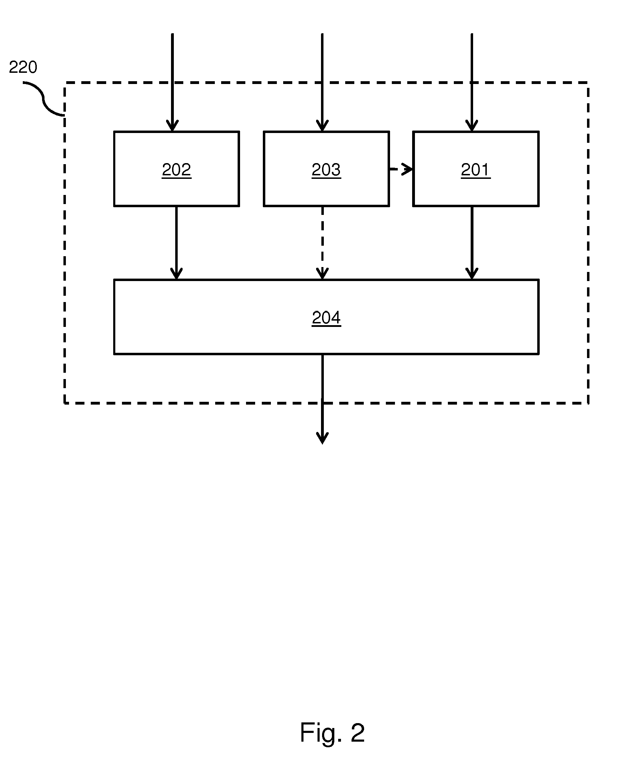

In an embodiment of the invention, as depicted in Fig. 2, an up-scaler 220 comprises an up-scaling unit 201 for generating an up-scaled image signal by up-scaling the intermediate image signal, the up-scaling unit 201 having substantially the same functionality as the up-scaler 200. The up-scaler 220 further comprises a resolution synthesizer 204 that creates the output image signal by using the input image signal and the up-scaled image signal. For example, the resolution synthesizer 204 may create an output image signal such that e.g. certain pixels, frequency components or spatial characteristics of the input image signal are directly used as pixels, frequency components or spatial characteristics of the output image signal. However, the resolution synthesizer 204 may also use the input image signal in an indirect way, for example by adapting a parameter to characteristics of the input image signal.

In an embodiment of the invention, the up-scaler 220 further comprises a first filter 202 for generating a high-frequent image signal comprising high-frequency elements of the input image signal, and the resolution synthesizer 204 is arranged for synthesizing the output image signal in dependence of the high frequent image signal and the up-scaled image signal.

For the first filter 202, many types of filtering can be used. For example, the first filter 202 may be one-dimensional or two-dimensional. A well-known filter for obtaining the high-frequency elements is the (linear) high-pass filter. This filter may comprise a filter having a high-pass characteristic, or may comprise a low-pass filter whereby the high-frequency elements are obtained by subtracting the low-pass filter output from the input image signal. Various other linear arrangements are possible as well. Similarly, the first filter 202 may be a non-linear filter, such as a median filter whereby the high-frequency elements are obtained by subtracting the median filter output from the input image signal.

The resolution synthesizer 204 creates an output image signal by using certain characteristics of the high frequent image signal and the up-scaled image signal. This may be in a direct way, e.g. the low- and medium frequency elements of the output image signal are derived from the up-scaled image signal whereas the high frequency elements are derived from the high frequent image signal, and as such, from the input image signal. A different selection of frequency elements is possible as well. The resolution synthesizer 204 may also use the high frequent image signal and/or the up-scaled image signal input image signal in an indirect way, for example by adapting a parameter to characteristics of either signal. For example, the high frequent image signal may be used to amplify or reduce the amplitude of high frequency elements in the up-scaled image signal, with the resulting up-scaled image signal then being used as the output image signal.

Fig. 2 is a block diagram of the up-scaler 220 further comprising an auxiliary receiving means 203 for receiving an auxiliary 3D signal comprising at least one of an occlusion or a transparency signal, and wherein the up-scaler 220 is arranged for generating the output image signal in dependence of the auxiliary 3D signal. The information contained in the auxiliary 3D signal is used by the up-scaling unit 201 and/or the resolution synthesizer 204. In the latter case, the resolution synthesizer 204 further comprises an auxiliary up-scaling unit for up-scaling the auxiliary 3D signal.

For example, if the auxiliary 3D signal contains an occlusion signal ('occlusion' referring to both 'occlusion' and 'de-occlusion' in this text), the up-scaling unit 201 can perform an 'intelligent' up-scaling of the intermediate image signal. The intelligent up-scaling may comprise a bilateral filter for performing guided up-scaling in dependence of the occlusion signal. The intelligent up-scaling may also consist of locally adjusting filter coefficients of the up-scaling unit 201 such that when the auxiliary 3D signal indicates the presence of occlusion, the up-scaling unit effectively creates a blurred up-scaled image signal. Furthermore, the resolution synthesizer 204 may be arranged to reduce the contribution of the high frequency elements that are derived from the high frequent image signal in occlusion areas as indicated by an up-scaled occlusion signal.

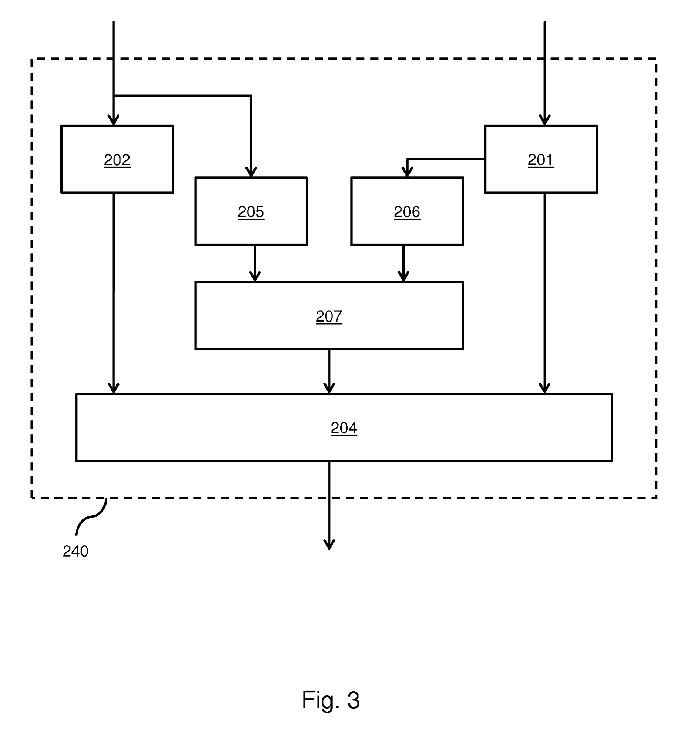

Fig. 3 is a block diagram of an up-scaler 240 comprising a first filter 202 and an up-scaling unit 201 as set forth. Furthermore, the up-scaler 240 comprises a second filter 205 for generating a first mid-frequent image signal comprising mid-frequency elements of the input image signal, and a third filter 206 for generating a second mid-frequent image signal comprising mid-frequency elements of the up-scaled image signal. As with the first filter 202, many types of filters can be used to obtain the mid-frequency elements. For example, a linear band-pass filter may be used, or a concatenation of a high-pass and a low-pass filter.

The up-scaler 240 further comprises a location determiner 207 receiving the first mid-frequent image signal and the second mid-frequent image signal. The location determiner 207 determines a (first) location where the first mid-frequent image signal corresponds to the second mid-frequent image signal at a reference location. In essence, given a part of a first image signal at a reference location, the location determiner 207 determines the part's location in a second image signal, the second image signal representing a different viewpoint of a 3D scene than the viewpoint represented by the first image signal. The location determiner 207 therefore implicitly determines a difference in location of the image part due to a difference in viewpoint represented by either image signal.

The up-scaler 240 further comprises the resolution synthesizer 204 being arranged for creating the output image signal by further using the high-frequent image signal at the first location and the up-scaled image signal at the reference location. The location determiner 207 provides the location of an image part in both image signals, and allows thereby the resolution synthesizer to compensate for a difference in location. The resolution synthesizer 204 therefore takes into account that a given area in the up-scaled image signal may be displaced in the high frequent image signal due to the difference in viewpoint.

In an embodiment of the invention, the location determiner 207 comprises similar functionality as that of a motion estimator. Although the reason behind the difference in location of an image part is typically different, motion estimation techniques can be applied for determining the first location. In motion estimation, any movement of objects between two image signals is typically introduced through a difference in capture time of both image signals, while in this field, any movement of objects is typically introduced through a difference in capture location, i.e. camera viewpoint, of both image signals. Solutions for motion estimation are widely known in industry and academia, particularly in the fields of motion estimation and disparity estimation. As such, many of the methods known from these fields may be applied with, if any, only minor modifications.

In an embodiment of the invention, the location determiner 207 determines a correspondence value that indicates how well the first mid-frequent image signal at the first location corresponds to the second mid-frequent image signals at the reference location. This value is typically indicative of the reliability of determining the first location. Additionally, correspondence values of neighboring locations may also be used for determining the correspondence value of the first location. Many approaches for determining motion vector reliability are known, which may also be used for determining said correspondence value.

Similarly, the correspondence value may be determined in dependence of an occlusion signal, the location determiner 207 being arranged for providing an occlusion signal by detecting occlusion areas. Solutions for detecting occlusion areas are known in the fields of viewpoint interpolation and frame-rate conversion, the latter due to the fact that the occlusion that occurs due to movement of objects in time is similar to the occlusion due to due to a difference in camera viewpoint. It is also known that in occlusion areas, the reliability of determining a difference in location of an image part, and as such of determining the first location, is typically very low. This is inherent to occlusion areas; an image part disappears (occludes) or re-appears (de-occludes) behind a foreground object, and hence the image part only appears in either the first or the second mid-frequent image signal. The likelihood of having determined a correct first location is therefore inherently very low.

Furthermore, the resolution synthesizer 204 synthesizes the output image signal in dependence of the correspondence value. For example, the high frequent image signal may be attenuated in areas in which the correspondence value is low, or the high frequent image signal may be further amplified in areas in which the correspondence value is high to create an impression of increased sharpness in the output image signal.

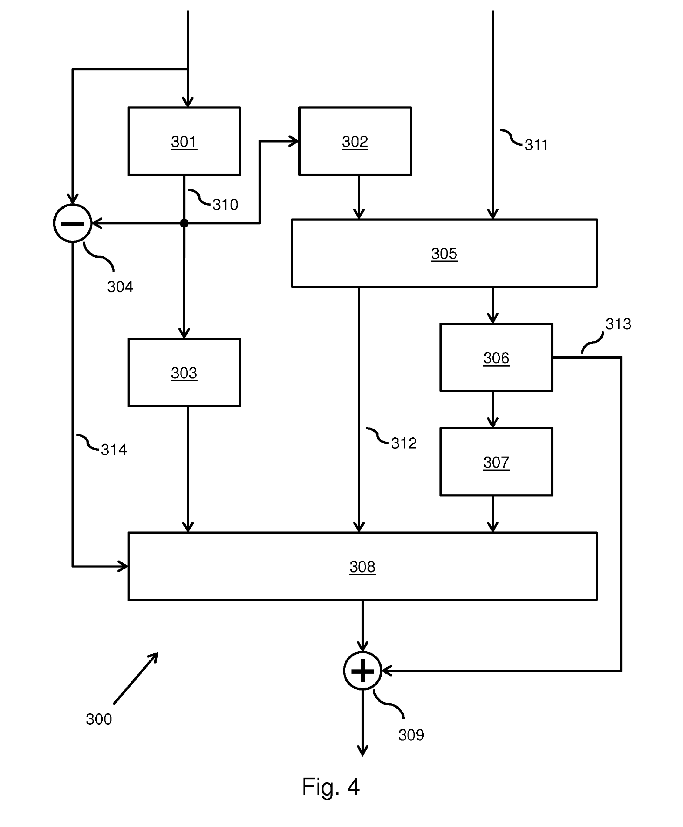

Fig. 4 is a block diagram of a device 300 comprising a high frequency transferer 308. The device 300 for generating an image signal representing a viewpoint of a 3D scene comprises a two-dimensional low pass filter 301 to restrict the spectrum of the input image signal to avoid aliasing when down-scaling. A resulting band-limited signal 310 is fed to a down-scaler 302 for down-scaling, to a first two-dimensional high pass filter 303 to obtain its medium frequency band and to a subtracting unit 304 to calculate a high frequency band 314 of the input image signal.

The down-scaled signal is then provided together with the low-resolution depth signal 311 to the viewpoint generator 305. The viewpoint generator generates not only an intermediate image signal representing an alternative viewpoint but also an inverse disparity signal 312 (also known as displacement signal), a dedicated signal that indicates the parallactic shift used to obtain a pixel in the intermediate image signal. This signal is further used in the high frequency transferer 308 to accelerate the location determining process.

The intermediate image signal is provided to an up-scaling unit 306 for up-scaling, and the result is provided to a second two-dimensional high pass filter 307 to estimate its medium frequency band. Various high pass filters may be used, e.g. a form of the Laplacian filter with the following two-dimensional kernel:

$$\begin{vmatrix} -1 & -1 & -1 \\ -1 & 8 & -1 \\ -1 & -1 & -1 \end{vmatrix}.$$

In the high frequency transferer 308, the transfer of high frequencies may be performed as follows.

First, correspondences (also known as correspondence values) are calculated between the pixels in the medium bands of the input and up-scaled image signals. This is done by e.g. calculating the cross-correlation between the pixels from both medium band images using the pixels within a small spatial match window, e.g. a block of 7x7 pixels, located around the first location and the reference location. The correspondences may be calculated for all locations within a small spatial search window $\omega_i$ (e.g. 5x3 pixels) centered around the first location in the medium frequency band of the input image signal. The first location can be established by employing the inverse disparity signal 312, which is provided by the viewpoint generator 305. The formula below shows an example of calculating the correspondence value $s_j$ for each location $j$ from the search window $\omega_i$, with the match window having a width of 2*$rx$+1 pixels and a height of 2*$ry$+1 pixels (e.g. $rx=3$ and $ry=3$ for a match window of 7x7 pixels) using the cross-correlation method:

$$s_j = \sum_{x=-rx}^{rx} \sum_{y=-ry}^{ry} m_j^c\left(x - d_j\left(x,y\right), y\right) \cdot m_j^s\left(x,y\right).$$

In this formula, $m_j^c\left(x',y'\right)$ and $m_j^s\left(x',y'\right)$ denote the medium frequency band signal shifted by x' horizontally and by y' vertically relative to a location j of the medium frequency bands of the input image signal c and up-scaled image signal s, respectively; $d_j(x,y)$ is a value of the inverse disparity signal that corresponds with the selected location $j$. As $s_j$ can take negative values if the correspondence is relatively low, it needs to be clipped to zero from the lower side since $s_j$ is further used as a weighting factor.

Other ways for calculating correspondence values are equally possible. For instance, correspondence values can be determined using the absolute differences:

$$s_j = \sum_{x=-rx}^{rx} \sum_{y=-ry}^{ry} f\left(\left| m_j^c\left(x - d_j\left(x,y\right), y\right) - m_j^s\left(x,y\right)\right|\right),$$

where function $f(\cdot)$ maps low value of its argument to high values and vice versa (e.g. an inverse exponent function can be used: $f(x) = e^{-a \cdot x}$).

Furthermore, a fixed number of locations with highest correspondences may be selected among the locations from the search window. These locations can then be used to account for the contribution of a pixel at each location to the estimate $h_i^s$ of a pixel from the high frequency band of the up-scaled image signal:

$$h_i^s = \frac{\sum_{j \in \Omega_i} s_j \cdot h_j^c}{\sum_{j \in \Omega_i} s_j}.$$

The estimate $h_i^s$ can therefore be interpreted as an estimate what the high frequency band of the up-scaled image signal would be if the up-scaled image signal would originally contain the high frequency band. In this formula,

$h_j^c$ is a pixel from the high frequency band of the input image signal, and $s_j$ is its correspondence value. The set $\Omega_i$ is formed by indexes of the locations which pixels have the N highest correspondence values from the search window $\omega_i$. Finally, the estimated high frequency band signal can be added to the up-scaled image signal 313 by an adding unit 309, thereby obtaining the desired high resolution output image signal.

In an embodiment of the invention, the estimated high frequency band signal is controlled in amplitude by the high frequency transferer 308 by the use of a gain signal g . This gain signal can be used not only to control the sharpness of the resulting high resolution output image signal, but also to suppress some high frequency artifacts that may be introduced by an erroneous inverse disparity signal 312. These artifacts may become quite visible in the regions where no high or medium frequency component is present in the up-scaled image signal 313. The high frequency transfer 308 detects this situation by looking at the local maximums of absolute value of the medium frequency band of the up-scaled image signal. In the case that these maximums do not exceed a predefined threshold, the gain signal g is reduced so that fewer or no "artificial" high frequencies are created.

In an embodiment of the invention, the high frequency transfer 308 detects occlusion areas in the up-scaled image signal by analyzing the inverse disparity signal 312, and the high frequency transfer 308 is arranged for adjusting the gain signal g in dependence of the occlusion areas. For example, particular changes in the inverse disparity signal 312 indicate occlusion areas, which may have resulted in artifacts in the up-scaled image signal 313. In such an area, the gain signal g is reduced so that fewer or no "artificial" high frequencies are created and the output image signal effectively remains blurred.

In an embodiment of the invention, the device 300 further comprises an auxiliary receiving means 203 for receiving an auxiliary 3D signal comprising at least one of an occlusion or a transparency signal, the high frequency transfer 308 comprises an auxiliary up-scaling unit to up-scale the auxiliary 3D signal, and the high frequency transfer 308 is arranged for adjusting the gain signal g in dependence of the auxiliary 3D signal. For example, when the auxiliary 3D signal indicates an occlusion area, the gain signal g can be reduced so that fewer or no "artificial" high frequencies are created. Similarly, when the auxiliary 3D signal indicates neither transparency nor occlusion, the gain signal g can be increased to create an impression of increased sharpness in the output image signal.

In the above description of the device 300, the up-scaling unit 306, the first two-dimensional high pass filter 303, the second two-dimensional high pass filter 307, the high frequency transferer 308 and the adding unit 309 constitute an embodiment of the up-scaler 200. Furthermore, the high frequency transferer 308 and the adding unit 309 constitute an embodiment of the resolution synthesizer 204.

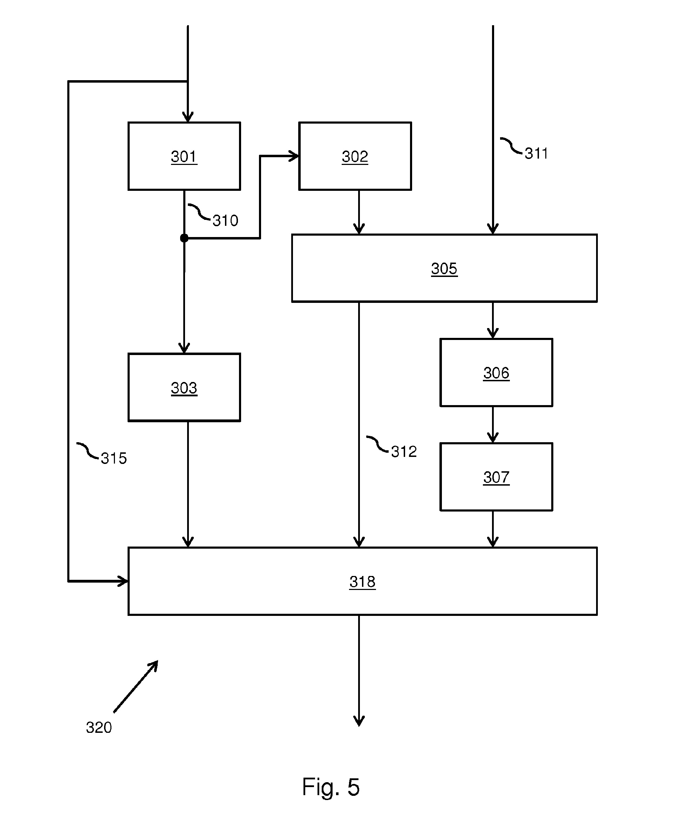

Fig. 5 is a block diagram of a device 320, the device 320 being largely identical to the device 300. However, the device 320 has a pixel transferer 318 for estimating an output pixel, whereas the device 300 has a high frequency transferer 308 for estimating only the high-frequency components of an output pixel. Although the pixel transferer 318 has very similar functionality to the high frequency transferer 308, it is differently arranged in certain aspects. More specifically, instead of estimating the high frequency band of a pixel of the up-scaled image signal $h_i^s$ from a weighted sum of the high frequency bands of the input image signal, as described by:

$$h_i^s = \frac{\sum_{j\in\Omega_i} s_j \cdot h_j^c}{\sum_{j\in\Omega_i} s_j} .$$

the pixel transferer 318 estimates the entire frequency band of the up-scaled image signal from a weighted sum of pixels of the input image signal. Hence, in the above formula, $h_j^c$ is a pixel from the input image signal, and $h_i^s$ is a pixel from the created output image signal. With the correspondence values $s_j$ being determined by means of the medium frequency band of the up-scaled image signal, the pixel transferer 318 therefore creates the output image signal in dependence of the input image signal and the up-scaled image signal.

The pixel transferer 318 therefore uses the input image signal 315 instead of the high frequency band of the input image signal 314, and as a consequence, the device 320 does not contain a subtracting unit 304. Furthermore, the pixel transferer 318 directly creates the output image signal instead of adding the estimated high frequency band signal to the up-scaled image signal 313 to create the output image signal. As a consequence, the device 320 does not contain an adding unit 309. Compared to the device 300, the device 320 may be considered to be a more computationally efficient variant.

In the above description of the device 320, the up-scaling unit 306, the first two-dimensional high pass filter 303, the second two-dimensional high pass filter 307 and the pixel transferer 318 constitute an embodiment of the up-scaler 200, and the pixel transferer 318 constitutes an embodiment of the resolution synthesizer 204.

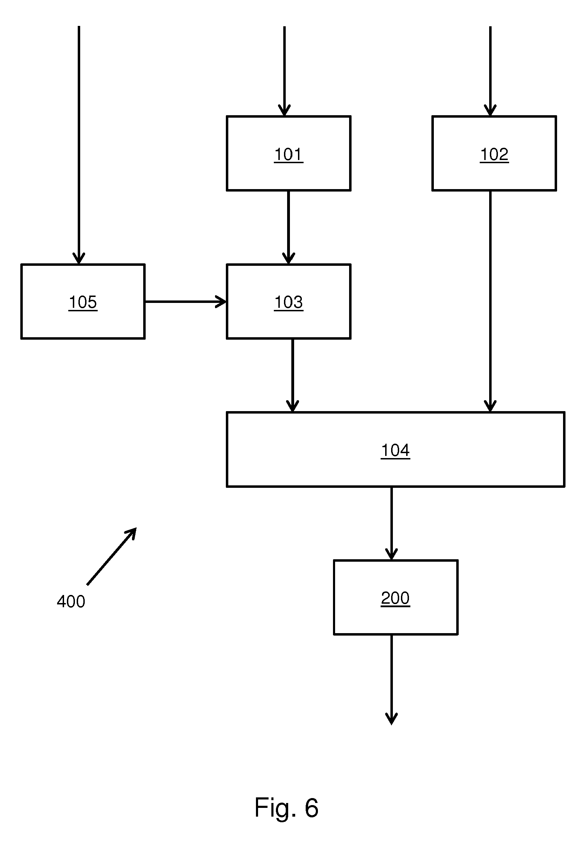

Fig. 6 is a block diagram of a device 400 comprising a metadata receiving means 105. The device 400 is identical to the device 100, except for the device 400 further comprising the metadata receiving means 105 for receiving metadata indicative of production of the depth signal, and the down-scaler 103 being arranged for adapting a down-scaler parameter in dependence of the metadata.

An improved picture quality of the output image signal may be obtained if the down-scaling of the input image signal by means of the down-scaler 103 is matched in characteristics with the way that the low resolution depth signal, and possibly also a low resolution auxiliary 3D signal, is generated at the content creation or transmitter side. The device 400 therefore receives metadata that indicates e.g. which down-scaling method is used, which down-scaling coefficients are used, whether the depth signal is down-scaled at all, what the original resolution of the depth signal is, etc. Furthermore, the down-scaler 103 is adapted according the metadata. For example, if the metadata indicates that the depth signal is downscaled with a given down-scaling method, the down-scaler 103 can be adapted to select a down-scaling method that matches the given down-scaling method as close as possible.

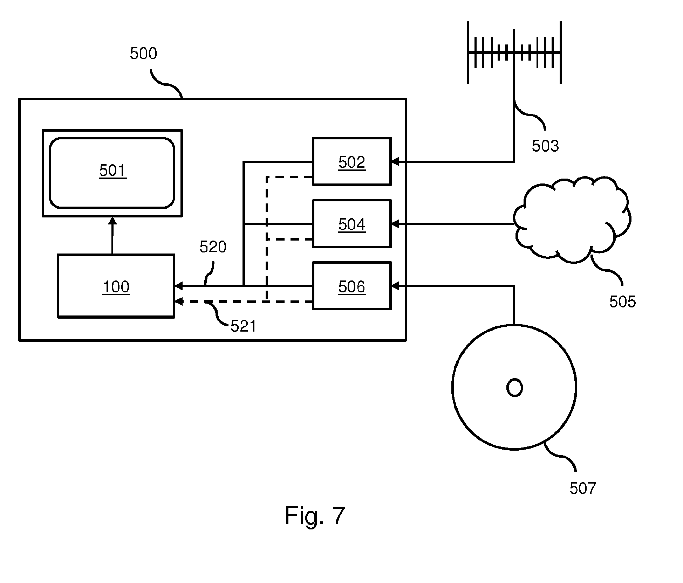

Fig. 7 is an illustration of a video device 500 comprising a device 100 for receiving an input image signal 520 and generating an output image signal, the video device further comprising a display 501 for displaying an image based on the output image signal, a broadcast receiver 502 for providing the input image signal by receiving a broadcast signal 503, an internet receiver 504 connected to the internet 505 for providing the input image signal, and a reader 506 for reading the input image signal from a storage medium 507.

The video device 500 may be e.g. a television, monitor, photo-frame, etc., which may be equipped with any type of 3D or 2D display. For example, the video device may be an auto-stereoscopic 3D television, the display may be a lenticular-based multi-view 3D display, and the device 100 may generate the required number of output signals for the various viewpoints that the display is capable of providing. The video device 500 may also be e.g. a set-top box, personal computer, optical disc recorder, harddisk recorder etc, in which case the video device is typically not provided with a display 501. Furthermore, the video device may be provided with only one or two of: the broadcast receiver 502, the internet receiver 504 or the reader 506.

The broadcast receiver 502 may be of any suitable type, e.g. for receiving terrestrial, satellite or cable broadcasts. The internet receiver 504 may also be of any suitable type, and may include modem functionality as required by e.g. ADSL, Ethernet, WLAN, UMTS etc, or be an interface protocol, e.g. TCP/IP. The reader 506 may be of any suitable type for reading an input image signal from a storage medium 507, the storage medium being of any suitable type, e.g. Blu-ray, DVD, flash-memory, ROM, RAM etc.

The depth signal 521 may be received from the same source as the input image signal 520, but may also be received from another source. An example of a suitable format for transmitting, storing and receiving the input image signal and the depth signal is given in 'Declipse 2: Multilayer Image-and-Depth with Transparency Made Practical' by B. Barenbrug, Proceedings of Stereoscopic Displays and Applications XX (2009).

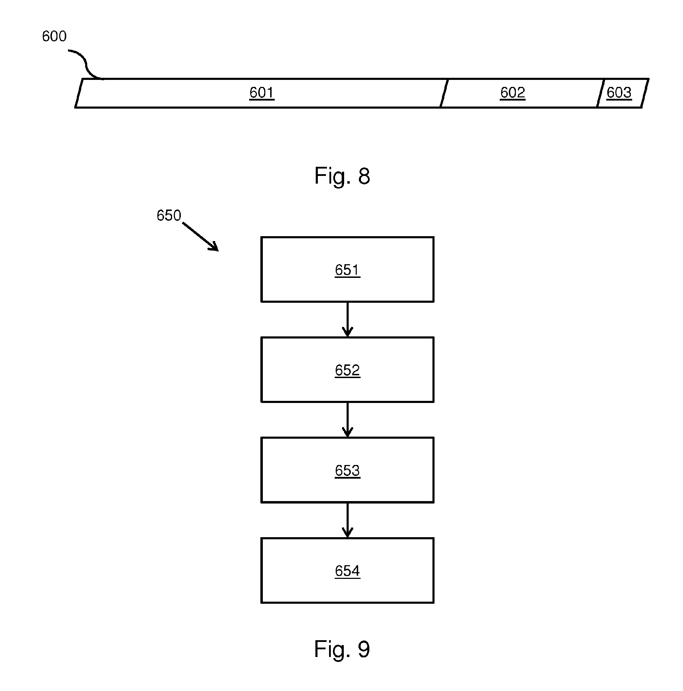

Fig. 8 is an illustration of a 3D image signal 600 representing a 3D scene comprising an image signal 601 at a first resolution, a depth signal 602 at a second resolution, the second resolution being lower than the first resolution, and the 3D image signal further comprising metadata 603 indicative of production of the depth signal 602. The metadata 603 indicates e.g. whether the depth signal is down-scaled, which down-scaling method is used, which down-scaling coefficients are used, what the original resolution of the depth signal is. It will be appreciated that other aspects to the adjustment of parameters of the down-scaler can be included as well. Furthermore, the metadata 603 may be transmitted, stored or received together with the image signal 601 and the depth signal 602 in any suitable arrangement, e.g. uncompressed, compressed, serial, parallel, time interleaved, spatially multiplexed, etc.

Fig. 9 is a flowchart of a method 650 for generating a 3D image signal 600, the method comprising including 651 in the 3D image signal an image signal 601 at a first resolution in a "Image including" step, including 652 in the 3D image signal a depth signal 602 at a second resolution in a "Depth including" step, the second resolution being lower than the first resolution, generating 653 metadata 603 indicative of production of the depth signal in a "Metadata generating" step, and including 654 the metadata in the 3D image signal in a "Metadata including" step. It will be appreciated that the execution of steps 651, 652 and 653 can occur in parallel.

Generating 653 the metadata may comprise determining or receiving information on how the depth signal 602 is produced during content creation and/or transmission, and further generating the metadata 603 based on said information. This information may include which down-scaling method is used, which down-scaling coefficients are used, whether the depth signal is down-scaled at all, what the original resolution of the depth signal is, etc. It will be appreciated that any other aspect on the production of the depth signal can be included as well.

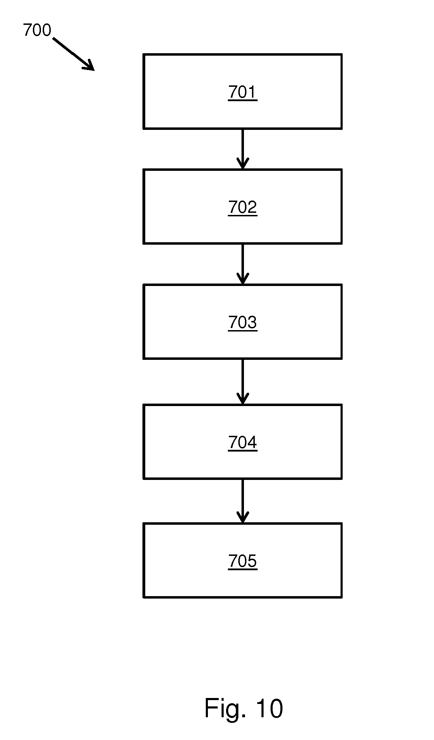

Fig. 10 is a flowchart of a method 700 for generating an image signal representing a viewpoint of a 3D scene, the method 700 comprising receiving 701 an input image signal at a first resolution in a "Image receiving" step, the input image representing the 3D scene from a first viewpoint, receiving 702 a depth signal at a second resolution in a "Depth receiving" step, the second resolution being lower than the first resolution, generating 703 a down-scaled image signal by down-scaling the input image signal to the second resolution in a "Down-scaling" step, generating 704 an intermediate image by displacing at least one part of the down-scaled image signal as a function of the depth signal in a "Generating" step, the intermediate image signal representing an alternate viewpoint of the 3D scene represented by the input image signal and the depth signal, and generating 705 an output image signal by up-scaling the intermediate image signal in an "Up-scaling" step.

It will be appreciated that the execution of steps 701 and 702 can occur in parallel. Also, the execution of the combination of steps 701 and 703 can occur in parallel with step 702.

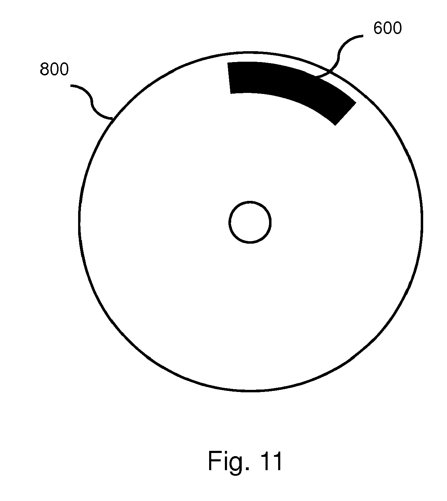

Fig. 11 is an illustration of a storage medium 800 comprising the 3D image signal 600. The storage medium 800 may be any suitable storage medium, such as Blu-ray, DVD, hard disk, etc., and may be non-recordable or recordable. In the former case, the storage medium 800 is manufactured to contain the 3D image signal 600 by converting the 3D image signal 600 into physical marks on the storage medium during manufacturing. In the latter case, the 3D image signal 600 is typically recorded on to the storage medium 800 by a consumer or a content creator, the step of recording involving converting the 3D image signal 600 into physical marks on the storage medium 800.

In another embodiment of the invention, a method for manufacturing comprises manufacturing a storage medium 800 comprising the 3D image signal 600. A storage medium can be manufactured to contain the 3D image signal by converting the 3D image signal into physical marks on the storage medium. An example of the method for manufacturing is the manufacturing of a Blu-ray disc containing a 3D movie for being sold to end-consumers in a store, the method comprising of converting the 3D image signal representing the 3D movie into physical marks on the storage medium being manufactured. The above description focuses on embodiments of the invention that receive and use a depth signal. However, the embodiments of the invention may be equally applied to any signal indicative of the third dimension, such as e.g. a disparity signal, which has an approximately inverse relation to a depth signal. The depth signal and disparity signal are both indicative of the distance that objects within the image signal have towards the camera, and methods for conversion between both signals are known. Furthermore, the depth signal may not have been received from broadcast or internet or read from a storage medium, but rather be locally generated in a depth signal generating device, incorporating e.g. the method as described in WO2005/083631 'Creating A Depth Map'. Hence, a video device according to an embodiment of the invention may receive only the input image signal, with the depth signal being generated in a depth signal generating device within the same video device.

The above description focuses on embodiments of the invention for providing an output image signal next to the input image signal. These signals may be used as a left and right image signal for addressing a stereoscopic 3D display. If the viewer is then presented with the left and right view in his/her left and right eye, respectively, the viewer's brain will typically interpret both separate views as if he/she were looking at a 3D scene with depth.

It will be appreciated, however, that the embodiments of the invention are be equally applicable for generating any number of output image signals representing alternate viewpoints. For example, an auto stereoscopic 3D display capable of providing 9 viewpoints may require 8 additional output signals to be generated next to the input signal, or alternatively 9 output signals if the input signal is not used for one of the viewpoint. Similarly, the embodiments of the invention are equally applicable to generate an output signal for a 2D display. Here, only one output signal may be generated and used instead of the input signal. Lastly, the embodiments of the invention are equally applicable for generating a sub-set of the required number of output image signals, whereas the remaining output image signals are generated using conventional techniques.

The above description also focuses on embodiments of the invention for generating an output image signal from an input signal and a depth signal. It will be appreciated, however, that the embodiments of the invention are equally applicable for generating an output image signal out of a first input signal, a second input signal and a depth signal. This so-called stereo or left+right input signal requires a suitable viewpoint generator. This may be a simple modification of an existing viewpoint generator, for example one that averages both input signals prior to displacing at least one part of the down-scaled average image signal, or a more advanced viewpoint generator.

It will be appreciated that the above description for clarity has described embodiments of the invention with reference to different functional units. However, it will be apparent that any suitable distribution of functionality between different functional units or processors may be used without detracting from the invention. For example, functionality illustrated to be performed by separate processors or controllers may be performed by the same processor or controllers. Hence, references to specific functional units are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality. Reference signs in the claims are provided merely as a clarifying example shall not be construed as limiting the scope of the claims in any way.

**Claims**

1.   A device (100, 400) for generating an image signal representing a viewpoint of a three dimensional scene, hereinafter referred to as 3D scene, the device comprising:

- an image receiving means (101) for receiving an input image signal at a first resolution, the input image signal representing the 3D scene from a first viewpoint,
- a depth receiving means (102) for receiving a depth signal at a second resolution, the second resolution being lower than the first resolution,
- a down-scaler (103) for generating a down-scaled image signal by down-scaling the input image signal to the second resolution,
- a viewpoint generator (104) for displacing at least one part of the down-scaled image signal as a function of the depth signal to generate an intermediate image signal, the intermediate image signal representing an alternate viewpoint of the 3D scene represented by the input image signal and the depth signal,
- an up-scaler (200, 220, 240) for generating an output image signal by up-scaling the intermediate image signal.

2.   A device according to claim 1, wherein the up-scaler (220) comprises:

- an up-scaling unit (201) for generating an up-scaled image signal by up-scaling the intermediate image signal,
- a resolution synthesizer (204) for synthesizing the output image signal in dependence of the input image signal and the up-scaled image signal.

3.   A device according to claim 2, wherein the up-scaler (240) further comprises:

- a first filtering means (202) for generating a high-frequent image signal comprising high-frequency elements of the input image signal,
- the resolution synthesizer (204) being arranged for synthesizing the output image signal in dependence of the high frequent image signal.

4.   A device according to claim 3, wherein the up-scaler (240) further comprises:

a second filtering means (205) for generating a first mid-frequent image signal comprising mid-frequency elements of the input image signal,

- a third filtering means (206) for generating a second mid-frequent image signal comprising mid-frequency elements of the up-scaled image signal,
- a location determiner (207) for determining a first location where the first mid-frequent image signal corresponds to the second mid-frequent image signal at a reference location,
and wherein the resolution synthesizer (204) is further arranged for synthesizing the output image signal in dependence of the high-frequent image signal at the first location and the up-scaled image signal at the reference location.

**5.** A device according to claim 4, wherein the location determiner (207) is arranged for:

- determining a first correspondence value indicative of correspondence between the first mid-frequent image signal at the first location and the second mid-frequent image signal at the reference location, and wherein the resolution synthesizer (204) is further arranged for synthesizing the output image signal in dependence of the first correspondence value.

**6.** A device according to claim 5, wherein the location determiner (207) is further arranged for:

- generating at least one additional location in dependence of the first location, the additional location being located at a distance from the first location,
- determining at least one additional correspondence value indicative of correspondence between the first mid-frequent image signal at the additional location and the second mid-frequent image signal at the reference location, and wherein the resolution synthesizer (204) is further arranged for synthesizing the output image signal in dependence of the high-frequent image signal at the additional location and the additional correspondence value.

**7.** A device according to claim 2, wherein the up-scaler (240) comprises:

- a second filtering means (205) for generating a first mid-frequent image signal comprising mid-frequency elements of the input image signal,
- a third filtering means (206) for generating a second mid-frequent image signal comprising mid-frequency elements of the up-scaled image signal,
- a location determiner (207) for determining a first location where the first mid-frequent image signal corresponds to the second mid-frequent image signal at a reference location,
- the resolution synthesizer (204) being arranged for synthesizing the output image signal in dependence of the input image signal at the first location.

**8.** A device according to claim 4 or 7, wherein the viewpoint generator (104) is arranged for generating a displacement signal indicative of the displacement of at least one part of the down-scaled image signal in the intermediate image, and wherein the location determiner (207) is arranged for determining the first location in dependence of the displacement signal.

**9.** A device according to claim 1, wherein the up-scaler (220) further comprises an auxiliary receiving means (203) for receiving an auxiliary 3D signal comprising at least one of an occlusion or a transparency signal, and wherein the up-scaler is arranged for generating the output image signal in dependence of the auxiliary 3D signal.

**10.** A device according to claim 1, wherein the device (400) further comprises a metadata receiving means (105) for receiving metadata indicative of production of the depth signal, and wherein the down-scaler (103) is arranged for adapting the down-scaling in dependence of the metadata.

**11.** A video device (500) comprising the device (100) of claim 1, the video device further comprising at least one of: a display (501) for displaying an image based on the output image signal, a broadcast receiver (502) for providing the input image signal by receiving a broadcast signal, an internet receiver (504) for providing the input image signal by receiving an internet signal or a reader (506) for reading the input image signal from a storage medium.

**12.** A 3D image signal (600) representing a 3D scene, the 3D image signal (600) comprising an image signal (601) at a first resolution, a depth signal (602) at a second resolution, the second resolution being lower than the first resolution, and the 3D image signal further comprising metadata (603) indicative of production of the depth signal.

**13.** A storage medium (800) comprising the 3D image signal (600) of claim 12.

**14.** A method (650) for generating a 3D image signal (600), the method comprising including (651) in the 3D image signal an image signal (601) at a first resolution, including (652) in the 3D image signal a depth signal (602) at a second resolution, the second resolution being lower than the first resolution, generating (653) metadata (603) indicative of production of the depth signal, and including (654) the metadata in the 3D image signal.

**15.** A method (700) for generating an image signal representing a viewpoint of a 3D scene, the method comprising:

- receiving (701) an input image signal at a first resolution, the input image representing the 3D scene from a first viewpoint,
- receiving (702) a depth signal at a second resolution, the second resolution being lower than the first resolution,
- generating (703) a down-scaled image signal by down-scaling the input image signal to the second resolution,
- generating (704) an intermediate image by displacing at least one part of the down-scaled image signal as a function of the depth signal, the intermediate image signal representing an alternate viewpoint of the 3D scene represented by the input image signal and the depth signal,
- generating (705) an output image signal by up-scaling the intermediate image signal.

**16.** A computer program product comprising instructions for causing a processor system to perform the method (700) according to claim 15.

100

```
        │                           │
        ▼                           ▼
  ┌───────────┐              ┌───────────┐
  │    101    │              │    102    │
  └───────────┘              └───────────┘
        │                           │
        ▼                           │
  ┌───────────┐                     │
  │    103    │                     │
  └───────────┘                     │
        │                           │
        ▼                           ▼
  ┌─────────────────────────────────────┐
  │                 104                  │
  └─────────────────────────────────────┘
                    │
                    ▼
             ┌───────────┐
             │    200    │
             └───────────┘
                    │
                    ▼
```

Fig. 1

220

| | | |
|---|---|---|
| 202 | 203 | 201 |

204

Fig. 2

Fig. 3

Fig. 4

Fig. 5

Fig. 6

Fig. 7

600

| | 601 | 602 | 603 |

Fig. 8

650

651

652

653

654

Fig. 9

700

701

702

703

704

705

Fig. 10

Fig. 11

EP 2 323 412 A1

## EUROPEAN SEARCH REPORT

Application Number

EP 09 17 5901

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SETHURAMAN S ET AL: "A multiresolution framework for stereoscopic image sequence compression" PROCEEDINGS OF THE INTERNATIONAL CONFERENCE ON IMAGE PROCESSING (ICIP) AUSTIN, NOV. 13 - 16, 1994; [PROCEEDINGS OF THE INTERNATIONAL CONFERENCE ON IMAGE PROCESSING (ICIP)], LOS ALAMITOS, IEEE COMP. SOC. PRESS, US, vol. 2, 13 November 1994 (1994-11-13), pages 361-365, XP010146192 ISBN: 978-0-8186-6952-1 * abstract * | 1-3,11, 15,16 | INV. H04N13/00 |
| Y | section: 1.Introduction section: 2.3 Low resolution disparity estimation * figure 3 * | 4-8 | |
| A | WO 2006/079963 A2 (KONINKL PHILIPS ELECTRONICS NV [NL]; BELT HARM [FR]; DE HAAN GERARD [F] 3 August 2006 (2006-08-03) * page 5, lines 8-22 * * page 5, line 33 - page 6, line 13 * | 1-8,11, 15-16 | |
| | | | TECHNICAL FIELDS SEARCHED (IPC) H04N |
| Y | BURT P ET AL: "Electronically directed focal stereo" COMPUTER VISION, 1995. PROCEEDINGS., FIFTH INTERNATIONAL CONFERENCE ON CAMBRIDGE, MA, USA 20-23 JUNE 1995, LOS ALAMITOS, CA, USA,IEEE COMPUT. SOC, US, 20 June 1995 (1995-06-20), pages 94-101, XP010146934 ISBN: 978-0-8186-7042-8 section: 2.3 Sampling section: 2.4 Disparity gradient constraint | 4-8 | |

-/--

The present search report has been drawn up for all claims

| Place of search | Date of completion of the search | Examiner |
|---|---|---|
| The Hague | 26 March 2010 | Borcea, Veronica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

25

Europäisches
Patentamt

European
Patent Office

Office européen
des brevets

# EUROPEAN SEARCH REPORT

**Application Number**

EP 09 17 5901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/084298 A2 (IN THREE INC [US]) 15 September 2005 (2005-09-15) * page 14, line 11 - page 16, line 2 * | 1-3,11, 15,16 | |
| Y | | 4-8 | |

----

**TECHNICAL FIELDS SEARCHED (IPC)**

~~The present search report has been drawn up for all claims~~

| Place of search | Date of completion of the search | Examiner |
|---|---|---|
| The Hague | 26 March 2010 | Borcea, Veronica |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

  & : member of the same patent family, corresponding
    document

EPO FORM 1503 03.82 (P04C01)

Europäisches
Patentamt
European
Patent Office
Office européen
des brevets

**Application Number**

EP 09 17 5901

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-8, 11, 15-16

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 09 17 5901

The Search Division considers that the present European patent application does not comply with the
requirements of unity of invention and relates to several inventions or groups of inventions, namely:

1. claims: 1-8, 11, 15-16

    image pair generating device with location determiner in
    order to provide the location of an image part in both image
    signals
    ---

2. claim: 9

    image generating device with improved quality in the
    presence of occlusion and/or transparency
    ---

3. claims: 10, 12-14

    image generating device with improved matching between the
    characteristics of the depth signal and the image signal
    ---

**ANNEX TO THE EUROPEAN SEARCH REPORT
ON EUROPEAN PATENT APPLICATION NO.**

EP 09 17 5901

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2010

| Patent document cited in search report | Publication date | Patent family member(s) | Publication date |
|---|---|---|---|
| WO 2006079963 A2 | 03-08-2006 | NONE | |
| WO 2005084298 A2 | 15-09-2005 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006120607 A
- WO 1997023097 A
- US 6323905 B1
- WO 2005083631 A

**Non-patent literature cited in the description**

- **W.T. Freeman et al.** IEEE Computer Graphics and Applications. March 2002
- **B. Barenbrug.** Declipse 2: Multilayer Image-and-Depth with Transparency Made Practical. *Proceedings of Stereoscopic Displays and Applications XX,* 2009